# EUROPEAN PATENT SPECIFICATION

(11) **EP 4 216 332 B1**
(45) Date of publication and mention of the grant of the patent: **17.06.2026**
(21) Application number: 21921462.4
(22) Date of filing: 06.12.2021
(51) Int. Cl.: H01M 10/0567, H01M 10/42, H01M 10/052, H01M 10/0525, H01M 10/0568

(54) **ELECTROLYTE FOR RECHARGEABLE LITHIUM BATTERY AND RECHARGEABLE LITHIUM BATTERY INCLUDING SAME**
ELEKTROLYT FÜR EINE WIEDERAUFLADBARE LITHIUMBATTERIE UND WIEDERAUFLADBARE LITHIUMBATTERIE DAMIT
ÉLECTROLYTE POUR BATTERIE AU LITHIUM RECHARGEABLE ET BATTERIE AU LITHIUM RECHARGEABLE LE COMPRENANT

(30) Priority: 22.01.2021 KR 20210009660
(43) Date of publication of application: 26.07.2023
(73) Proprietor: Samsung SDI Co., Ltd., Yongin-si, Gyeonggi-do 17084 (KR)
(72) Inventor: KIM, Minseo, Yongin-si, Gyeonggi-do 17084 (KR); KIM, Dahyun, Yongin-si, Gyeonggi-do 17084 (KR); WOO, Myungheui, Yongin-si, Gyeonggi-do 17084 (KR); LEE, Tae Jin, Yongin-si, Gyeonggi-do 17084 (KR)
(74) Representative: Gulde & Partner
(86) International application number: PCT/KR2021/018322
(87) International publication number: WO 2022/158703

(56) References cited:
- EP-A1- 3 512 024
- EP-A1- 3 522 287
- JP-A- 2015 191 851
- KR-A- 20100 133 455
- KR-A- 20170 018 739
- KR-A- 20170 018 739
- KR-A- 20180 027 997
- KR-A- 20180 027 997
- KR-A- 20180 036 340
- KR-A- 20180 036 340

## Description

### [Technical Field]

This invention relates to an electrolyte for a rechargeable lithium battery and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made. For example, KR 2018 0027997 A discloses a nonaqueous electrolyte comprising a lithium salt, a nonaqueous organic solvent, and an electrolyte additive, wherein the electrolyte additive comprises a salt of an anion, derived from a nitrogen-atom-containing compound, and Cs⁺ or Rb⁺. KR 2017 0018739 A and KR 2018 0036340 A also relate to different additives for an electrolyte for a lithium battery.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Particularly, the electrolyte uses an organic solvent in which a lithium salt is dissolved, and such an electrolyte is important in determining stability and performance of a rechargeable lithium battery.

Recently, a safety problem has emerged due to an increase in energy density due to a high capacity of a rechargeable lithium battery, and a method of using a flame retardant as an additive for an electrolyte is known as one of the methods for improving safety.

As the flame retardant, fluorine-based compounds, phosphorus-based compounds, sulfur-based compounds, and the like are mainly used as compounds having low environmental pollution issues and flame retardancy, but the use of these flame retardants may cause deterioration in battery performance.

Accordingly, there is a demand for an electrolyte having improved battery performance while ensuring safety.

### [Disclosure]

### [Technical Problem]

An embodiment provides a rechargeable lithium battery having improved room-temperature cycle-life characteristics, high-temperature cycle-life characteristics, and storage characteristics while securing battery safety such as thermal safety and penetration stability.

### [Technical Solution]

The present invention provides an electrolyte for a rechargeable lithium battery including a non-aqueous organic solvent, a lithium salt, and an additive, wherein the additive is a composition including a first compound represented by Chemical Formula 1 and a second compound represented by Chemical Formula 2-1 or Chemical Formula 2-2, and the first compound and the second compound are included in a weight ratio of 1 : 1 to 1 : 2:

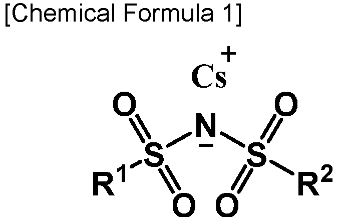

In Chemical Formula 1,
R¹ and R² are each independently a fluoro group or a C1 to C4 fluoroalkyl group substituted with at least three fluoro groups, 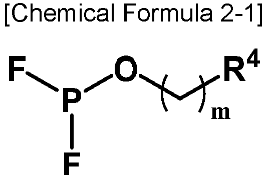
wherein, in Chemical Formula 2-1,
m is one of integers from 1 to 5, and
R⁴ is a cyano group (-CN) or a difluorophosphite group (-OPF₂), 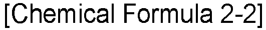 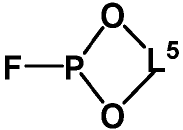
wherein, in Chemical Formula 2-2,
L⁵ is a substituted or unsubstituted C2 to C5 alkylene group.

The first compound and the second compound may be included in a weight ratio of 1 : 1 to 1 : 1.5.

Chemical Formula 1 may be represented by Chemical Formula 1-1 or Chemical Formula 1-2.

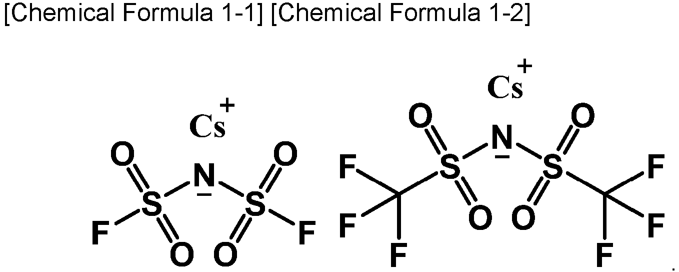

The second compound may be represented by Chemical Formula 2-2a or Chemical Formula 2-2b.

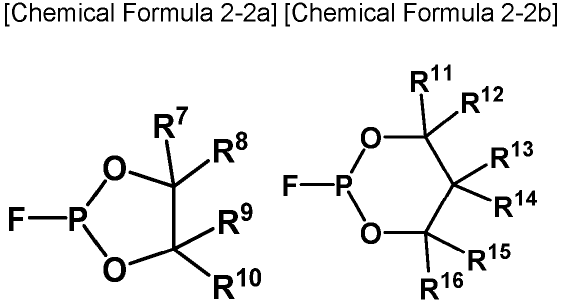

In Chemical Formula 2-2a and Chemical Formula 2-2b,
R⁷ to R¹⁶ are each independently hydrogen, a halogen group, or a substituted or unsubstituted C1 to C5 alkyl group.

The second compound may be any one selected from compounds listed in Group 1.

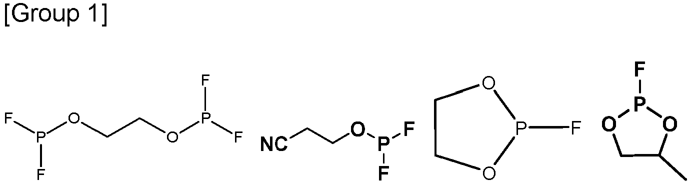

The first compound may be included in an amount of 0.05 wt% to 2.0 wt% based on the total weight of the electrolyte for the rechargeable lithium battery.

The second compound may be included in an amount of 0.05 wt% to 5.0 wt% based on the total weight of the electrolyte for the rechargeable lithium battery.

The first compound may be included in an amount of 0.5 wt% to 2.0 wt% based on the total weight of the electrolyte for the rechargeable lithium battery.

The second compound may be included in an amount of 0.5 wt% to 5.0 wt% based on the total weight of the electrolyte for the rechargeable lithium battery.

The composition may be included in an amount of 1.0 wt% to 5.0 wt% based on the total weight of the electrolyte for the rechargeable lithium battery.

Another embodiment of the present invention provides a rechargeable lithium battery including a positive electrode including a positive electrode active material, a negative electrode including a negative electrode active material, and the aforementioned electrolyte for the rechargeable lithium battery.

### [Advantageous Effects]

A rechargeable lithium battery with improved battery safety, room-temperature characteristics and high-temperature characteristics may be implemented.

### [Description of the Drawings]

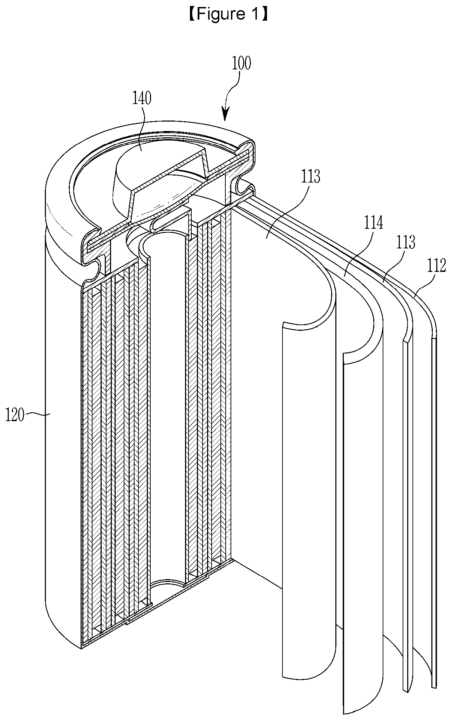

FIG. 1 is a schematic view showing a rechargeable lithium battery according to an embodiment of the present invention.

### <Description of Symbols>

100: rechargeable lithium battery
112: negative electrode
113: separator
114: positive electrode
120: battery case
140: sealing member

### [Mode for Invention]

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen in a substituent or compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this invention are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes an electrolyte, a positive electrode, and a negative electrode.

The electrolyte includes a non-aqueous organic solvent, a lithium salt, and an additive, wherein the additive is a composition including a first compound represented by Chemical Formula 1 and a second compound represented by Chemical Formula 2-1 or Chemical Formula 2-2, and the first compound and the second compound are included in a weight ratio of 1 : 1 to 1 : 2.

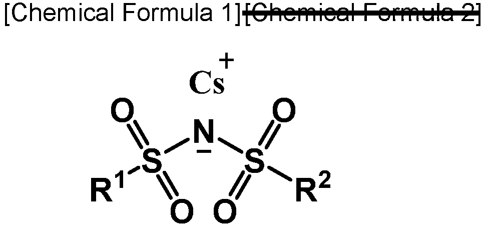

In Chemical Formula 1,
R¹ and R² are each independently a fluoro group or a C1 to C4 fluoroalkyl group substituted with at least three fluoro group,

The first compound includes a cesium sulfonylimide salt. The first compound is decomposed in the electrolyte and forms a film on the surfaces of the positive and negative electrodes to effectively control elution of lithium ions and resultantly, prevent decomposition of the positive electrode. Specifically, the first compound is earlier reduced and decomposed than a carbonate-based solvent included in a non-aqueous organic solvent and forms an SEI (Solid Electrolyte Interface) film on the negative electrode to prevent the decomposition of the electrolyte and the resulting decomposition of the electrode, suppressing an increase in internal resistance due to gas generation. A portion of the SEI film formed on the negative electrode is decomposed through a reduction reaction during the charge and discharge, moves toward the positive electrode surface, and also forms a film on the positive electrode surface through an oxidation reaction to prevent the decomposition of the positive electrode surface and the resulting oxidation reaction of the electrolyte, contributing to improving high and low temperature cycle-life characteristics.

In other words, the composition includes the first compound represented by Chemical Formula 1 and thus may improve cycle-life characteristics and safety of the battery.

In addition, the composition also included the second compound such as a fluorophosphite-based compound and thus may suppress the high temperature decomposition of the electrolyte through stabilization of a lithium salt in the electrolyte as well as flame retardant properties, further improving the gas generation suppression at a high temperature inside the battery and resultantly, improving battery safety and cycle-life characteristics at the same time.

When the first compound and the second compound are used in combination, compared with when each compound alone is used, since the film is more firmly formed on the negative electrode surface, high-temperature storage characteristics may be much more improved.

The first compound and the second compound are be included in a weight ratio of for example 1 : 1 to 1 : 1.5.

R¹ and R² in Chemical Formula 1 are each independently a fluoro group or a C1 to C4 fluoroalkyl group substituted with at least three fluoro groups.

As a specific example, R¹ and R² in Chemical Formula 1 may each independently be a fluoro group or a C1 to C3 fluoroalkyl group substituted with at least three fluoro groups.

As a more specific example, R¹ and R² in Chemical Formula 1 may each independently be a fluoro group or a C1 to C2 fluoroalkyl group substituted with at least three fluoro groups.

For example, compound represented by Chemical Formula 1 may be represented by Chemical Formula 1-1 or Chemical Formula 1-2.

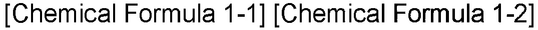

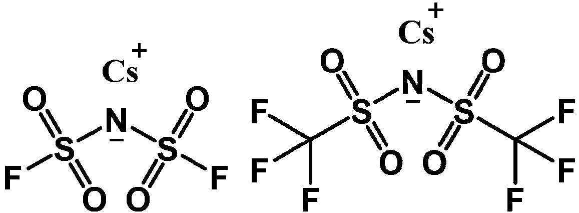

The second compound is represented by Chemical Formula 2-1 or Chemical Formula 2-2.

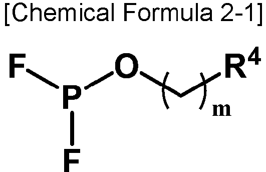

In Chemical Formula 2-1,
m is one of integers from 1 to 5, and
R⁴ is a cyano group (-CN) or a difluorophosphite group (-OPF₂).

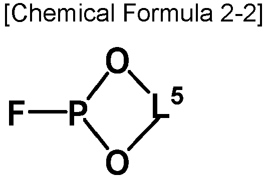

In Chemical Formula 2-2,
L⁵ is a substituted or unsubstituted C2 to C5 alkylene group.

More specifically, the second compound may be represented by Chemical Formula 2-2a or Chemical Formula 2-2b.

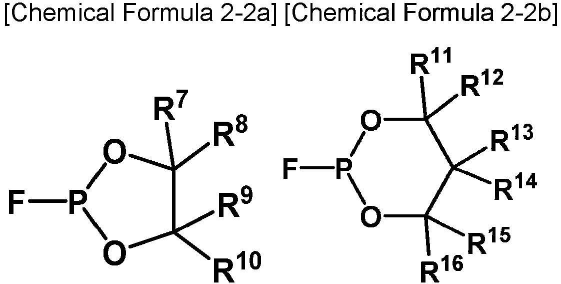

In Chemical Formula 2-2a and Chemical Formula 2-2b,
R⁷ to R¹⁶ are each independently hydrogen, a halogen group, or a substituted or unsubstituted C1 to C5 alkyl group.

For example, the second compound may be any one selected from the compounds listed in Group 1.

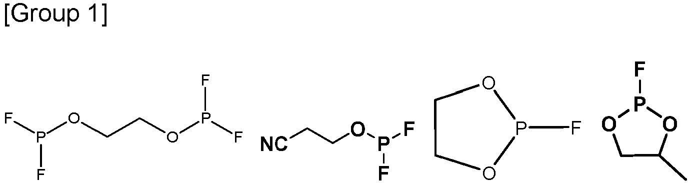

According to the most specific embodiment, the additive included in the electrolyte for the rechargeable lithium battery according to the present invention may be a composition including cesium bis(fluorosulfonyl)imide as the first compound and at least one of the compounds listed in Group 1 as the second compound.

According to another most specific embodiment, it may be a composition including cesium bis(trifluoromethane sulfonyl)imide as the first compound and at least one of the compounds listed in Group 1 as the second compound.

Meanwhile, the first compound may be included in an amount of about 0.05 wt% to about 2.0 wt% based on the total weight of the electrolyte for the rechargeable lithium battery.

For example, it may be included in about 0.1 wt% to about 2.0 wt%, about 0.2 wt% to about 2.0 wt%, about 0.3 wt% to about 2.0 wt%, or about 0.4 wt% to about 2.0 wt%, for example about 0.5 wt% to about 2.0 wt%.

In addition, the second compound may be included in an amount of 0.05 to 5.0 wt% based on the total weight of the electrolyte for the rechargeable lithium battery.

For example, it may be included in about 0.1 wt% to about 5.0 wt%, about 0.2 wt% to about 5.0 wt%, about 0.3 wt% to about 5.0 wt%, or about 0.4 wt% to about 5.0 wt%, for example about 0.5 wt% to 5.0 wt%.

For example, the first compound may be included in an amount of about 0.5 wt% to about 2.0 wt% based on the total weight of the electrolyte for the rechargeable lithium battery, and the second compound may be included in an amount of about 0.5 wt% to about 5.0 wt% based on the total weight of the electrolyte for the rechargeable lithium battery.

Specifically, the first compound may be included in an amount of about 0.5 wt% to about 2.0 wt% based on the total weight of the electrolyte for the rechargeable lithium battery, and the second compound may be included in an amount of 0.5 wt% to 4.0 wt% based on the total weight of the electrolyte for the rechargeable lithium battery.

More specifically, the first compound may be included in an amount of about 0.5 wt% to about 2.0 wt% based on the total weight of the electrolyte for the rechargeable lithium battery, and the second compound may be included in an amount of 0.5 wt% to 3.0 wt% based on the total weight of the electrolyte for the rechargeable lithium battery.

For example, the first compound may be included in an amount of about 0.5 wt% to about 2.0 wt% based on the total weight of the electrolyte for the rechargeable lithium battery, and the second compound may be included in an amount of 0.5 wt% to 1.0 wt% based on the total weight of the electrolyte for the rechargeable lithium battery.

The composition including the first compound and the second compound may be included in an amount of about 1.0 wt% to about 5.0 wt% based on the total weight of the electrolyte for the rechargeable lithium battery.

When the contents of the composition and each component, that is, the first compound and the second compound in the composition, are within the above ranges, it is possible to realize a rechargeable lithium battery with improved battery safety such as thermal safety or penetration safety and suppressed generation of gas inside the battery, thereby improving battery characteristics at room temperature and high temperature.

The non-aqueous organic solvent serves as a medium for transmitting ions taking part in the electrochemical reaction of a battery.

The non-aqueous organic solvent serves as a medium for transmitting ions taking part in the electrochemical reaction of a battery.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as R¹⁵-CN (wherein R¹⁵ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 4.

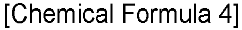

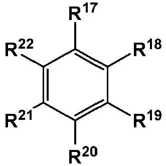

In Chemical Formula 4, R¹⁷ to R²² are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, lithium difluoro(oxalato)borate (LiDFOB), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), (wherein x and y are natural numbers, for example an integer of 1 to 20), LiCl, Lil, and LiB(C₂O₄)₂ (lithium bis(oxalato) borate: LiBOB). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

Specifically, one or more of a composite oxide of a metal selected from cobalt, manganese, nickel, and a combination thereof and lithium may be used.

Of course, one having a coating layer on the surface of the lithium composite oxide may be used, or a mixture of the composite oxide and a compound having a coating layer may be used. The coating layer may include one or more coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na,

Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

The positive electrode active material may be, for example, one or more of lithium composite oxides represented by Chemical Formula 3.

[Chemical Formula 3] LiₓM¹_{y}M²_{z}M³_{1-y-z}O₂

In Chemical Formula 3,
0.5≤x≤1.8, 0<y≤1, 0≤z≤1, 0≤y+z≤1, and M¹, M², and M³ are each independently any one selected from a metal such as Ni, Co, Mn, Al, Sr, Mg, or La, and a combination thereof.

In an embodiment, M¹ and M² may each independently be Ni or Co, and M³ may be a metal such as Co, Mn, Al, Sr, Mg, or La.

In a specific embodiment, M¹ and M² may each independently be Ni or Co, and M³ may be Mn or Al, but they are not limited thereto.

In a more specific embodiment, the positive electrode active material may be a lithium composite oxide represented by Chemical Formula 3-1 or Chemical Formula 3-2.

[Chemical Formula 3-1] Liₓ₁Niy₁Co_{z1}Al_{1-y1-z1}O₂

In Chemical Formula 3-1,
1≤x1≤1.2, 0<y1<1, and 0<z1<1, and

[Chemical Formula 3-2] Liₓ₂Ni_{y2}Co_{z2}Mn_{1-y2-z2}O₂

wherein in Chemical Formula 3-2,
1≤x2≤1.2, 0<y2<1, and 0<z2<1.

For example, in Chemical Formula 3-1, 1≤x1≤1.2, 0.5≤y1<1, and 0<z1≤0.5.

As a specific example, in Chemical Formula 3-1, 1≤x1≤1.2, 0.6≤y1<1, and 0<z1 ≤ 0.5.

As a more specific example, in Chemical Formula 3-1, 1≤x1≤1.2,

0.7≤y1<1, and 0<z1≤0.5.

For example, in Chemical Formula 3-1, 1≤x1≤1.2, 0.8≤y1<1, and 0<z1≤0.5.

For example, in Chemical Formula 3-2, 1≤x2≤1.2, 0.3≤y2<1, and 0.3≤z2<1.

As a specific example, in Chemical Formula 3-2, 1≤x2≤1.2, 0.6≤y2<1, and 0.3≤z2<1.

As a more specific example, in Chemical Formula 3-2, 1≤x2≤1.2,

0.7≤y2<1, and 0.3≤z2<1.

For example, in Chemical Formula 3-2, 1≤x2≤1.2, 0.8≤y2<1, and 0.3≤z2<1.

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the binder may be 1 wt% to 5 wt%, based on the total weight of the positive electrode active material layer.

A content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, SiOₓ (0 < x < 2), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, SnO₂, Sn-R²² (wherein R²² is an element selected from an alkali metal, an alkaline-earth metal, a Group 13 element, a Group 14 element, a Group 15 element, a Group 16 element, a transition metal, a rare earth element, and a combination thereof, but not Sn), and the like. One or more of these materials may be mixed with SiO₂.

The elements Q and R²² may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be a Si-C composite including a Si-based active material and a carbon-based active material.

An average particle diameter of the Si-based active material in the Si-C composite may be 50 nm to 200 nm.

When the average particle diameter of the Si-based active material is within the above range, volume expansion occurring during charging and discharging may be suppressed, and a break in a conductive path due to particle crushing during charging and discharging may be prevented.

The Si-based active material may be included in an amount of 1 wt% to 60 wt%, for example, 3 wt% to 60 wt% based on the total weight of the Si-C composite.

In another specific embodiment, the negative electrode active material may further include crystalline carbon together with the aforementioned Si-C composite.

When the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. More specifically, the Si-C composite and crystalline carbon may be included in a weight ratio of 5 : 95 to 20 : 80.

The crystalline carbon may include, for example, graphite, and more specifically, natural graphite, artificial graphite, or a mixture thereof.

An average particle diameter of the crystalline carbon may be 5 µm to 30 µm.

In the present specification, an average particle diameter may be a particle size (D50) at a volume ratio of 50% in a cumulative size-distribution curve.

The Si-C composite may further include a shell surrounding a surface of the Si-C composite, and the shell may include amorphous carbon.

The amorphous carbon may include soft carbon, hard carbon, a mesophase pitch carbonized product, calcined coke, or a mixture thereof.

The amorphous carbon may be included in an amount of 1 to 50 parts by weight, for example, 5 to 50 parts by weight, or 10 to 50 parts by weight based on 100 parts by weight of the carbon-based active material.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

### DETAILED DESCRIPTION OF THE EMBODIMENTS

Hereinafter, examples of the present invention and comparative examples are described. These examples, however, are not in any sense to be interpreted as limiting the scope of the invention.

### Manufacture of Rechargeable Lithium Battery Cells

### Example 1

LiNi_{0.01}Co_{0.07}Al_{0.02}O₂ as a positive electrode active material, polyvinylidene fluoride as a binder, and ketjen black as a conductive material were mixed in a weight ratio of 97:2:1 and then, dispersed in N-methyl pyrrolidone, preparing positive electrode active material slurry.

The positive electrode active material slurry was coated on a 14 µm-thick Al foil, dried at 110 °C, and roll-pressed, manufacturing a positive electrode.

A negative electrode active material prepared by mixing artificial graphite and an Si-C composite in a weight ratio of 93:7, and a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and a coal-based pitch coated on the surface of the core.

The negative electrode active material slurry was coated on a 10 µm-thick Cu and then, dried at 100 °C and pressed, manufacturing a negative electrode.

The positive electrode and the negative electrode were assembled with a 25 µm-thick polyethylene separator to manufacture an electrode assembly, and an electrolyte was injected thereinto, manufacturing a rechargeable lithium battery cell.

The electrolyte had a composition as follows.

### (Composition of the electrolyte)

Salt: 1.5 M LiPF₆
Solvent: ethylene carbonate: ethylmethyl carbonate: dimethyl carbonate (EC: EMC:DMC= a volume ratio of 20:10:70)

Additive: a composition including 0.5 wt% of cesium bis(trifluoromethanesulfonyl)imide represented by Chemical Formula 1-2 and 0.5 wt% of a compound represented by Chemical Formula z-1
(in the composition of the electrolyte, "wt%" is based on the total content of electrolyte (lithium salt + non-aqueous organic solvent+additive))

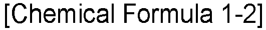

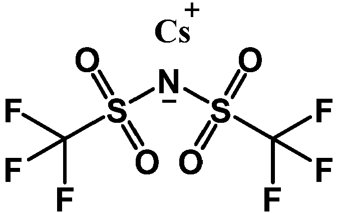

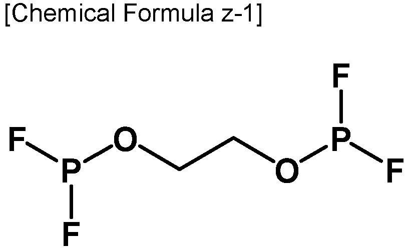

### Example 2

A rechargeable lithium battery cell was manufactured in the same manner as in Example 1 except that the additive composition was prepared by using a compound represented by Chemical Formula z-2 instead of the compound represented by Chemical Formula z-1.

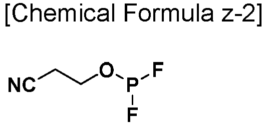

### Example 3

A rechargeable lithium battery cell was manufactured in the same manner as in Example 1 except that the additive composition was prepared by using a compound represented by Chemical Formula z-3 instead of the compound represented by Chemical Formula z-1.

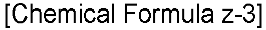

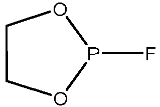

### Example 4

A rechargeable lithium battery cell was manufactured in the same manner as in Example 1 except that the additive composition was prepared by using 0.75 wt% of a compound represented by Chemical Formula z-4 instead of the compound represented by Chemical Formula z-1.

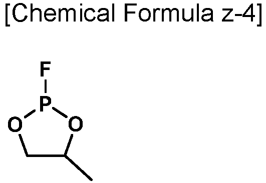

### Examples 5 to 8

Each rechargeable lithium battery cell was manufactured in the same manner as respectively in Examples 1 to 4 except that the additive composition was prepared by using 0.75 wt% of the compound represented by Chemical Formula z-4 instead of the compound represented by Chemical Formula z-1.

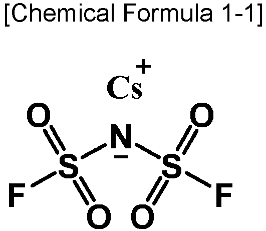

### Example 9

A rechargeable lithium battery cell was manufactured in the same manner as in Example 1 except that the additive composition was prepared by using 1.0 wt% of the compound represented by Chemical Formula z-1.

### Example 10

A rechargeable lithium battery cell was manufactured in the same manner as in Example 2 except that the additive composition was prepared by using 1.0 wt% of the compound represented by Chemical Formula z-2.

### Example 11

A rechargeable lithium battery cell was manufactured in the same manner as in Example 3 except that the additive composition was prepared by using 1.0 wt% of the compound represented by Chemical Formula z-3.

### Example 12

A rechargeable lithium battery cell was manufactured in the same manner as in Example 4 except that the additive composition was prepared by using 1.0 wt% of the compound represented by Chemical Formula z-4.

### Examples 13 to 16

Each rechargeable lithium battery cell was manufactured in the same manner as respectively in Examples 9 to 12 except that the additive composition was prepared by using cesium bis(fluorosulfonyl)imide represented by Chemical Formula 1-1 instead of the cesium bis(trifluoromethanesulfonyl)imide represented by Chemical Formula 1-2.

### Comparative Example 1

A rechargeable lithium battery cell was manufactured in the same manner as in Example 1, except for using an electrolyte without additives.

### Comparative Example 2

A rechargeable lithium battery cell was manufactured in the same manner as in Example 1 except that the electrolyte was prepared by using an additive not including the compound represented by Chemical Formula z-1.

### Comparative Example 3

A rechargeable lithium battery cell was manufactured in the same manner as in Example 1 except that the electrolyte was prepared by using the compound represented by Chemical Formula 1-1 alone.

### Comparative Example 4

A rechargeable lithium battery cell was manufactured in the same manner as in Example 1 except that the electrolyte was prepared by using an additive not including the compound represented by Chemical Formula 1-2.

### Comparative Example 5

A rechargeable lithium battery cell was manufactured in the same manner as in Example 1 except that the electrolyte was prepared by using an additive including 0.5 wt% of Li(CF₃SO₂)₂N instead of the compound represented by Chemical Formula 1-2.

### Comparative Example 6

A rechargeable lithium battery cell was manufactured in the same manner as in Comparative Example 4 except that the electrolyte was prepared by using an additive including the compound represented by Chemical Formula z-2 instead of the compound represented by Chemical Formula z-1.

### Comparative Example 7

A rechargeable lithium battery cell was manufactured in the same manner as in Comparative Example 5 except that the electrolyte was prepared by using an additive including the compound represented by Chemical Formula z-2 instead of the compound represented by Chemical Formula z-1.

### Comparative Example 8

A rechargeable lithium battery cell was manufactured in the same manner as in Comparative Example 4 except that the electrolyte was prepared by using an additive including the compound represented by Chemical Formula z-3 instead of the compound represented by Chemical Formula z-1.

### Comparative Example 9

A rechargeable lithium battery cell was manufactured in the same manner as in Comparative Example 5 except that the electrolyte was prepared by using an additive including the compound represented by Chemical Formula z-3 instead of the compound represented by Chemical Formula z-1.

### Comparative Example 10

A rechargeable lithium battery cell was manufactured in the same manner as in Comparative Example 4 except that the electrolyte was prepared by using an additive including 0.75 wt% of the compound represented by Chemical Formula z-4 instead of the compound represented by Chemical Formula z-1.

### Comparative Example 11

A rechargeable lithium battery cell was manufactured in the same manner as in Comparative Example 5 except that the electrolyte was prepared by using an additive including 0.75 wt% of the compound represented by Chemical Formula z-4 instead of the compound represented by Chemical Formula z-1.

### Comparative Example 12

A rechargeable lithium battery cell was manufactured in the same manner as in Example 1 except that the electrolyte was prepared by using an additive including 0.5 wt% of LiDFOB instead of the compound represented by Chemical Formula z-1.

### Comparative Example 13

A rechargeable lithium battery cell was manufactured in the same manner as in Example 1 except that the additive composition was prepared by changing the content of the cesium bis(trifluoromethanesulfonyl)imide represented by Chemical Formula 1-2 into 2.0 wt%.

### Comparative Example 14

A rechargeable lithium battery cell was manufactured in the same manner as in Example 1 except that the additive composition was prepared by changing the content of the compound represented by Chemical Formula z-1 into 5.0 wt%.

### Comparative Example 15

A rechargeable lithium battery cell was manufactured in the same manner as in Example 2 except that the additive composition was prepared by changing the content of the cesium bis(trifluoromethanesulfonyl)imide represented by Chemical Formula 1-2 into 2.0 wt%.

### Comparative Example 16

A rechargeable lithium battery cell was manufactured in the same manner as in Example 2 except that the additive composition was prepared by changing the content of the compound represented by Chemical Formula 1-2 into 5.0 wt%.

### Comparative Example 17

A rechargeable lithium battery cell was manufactured in the same manner as in Example 3 except that the additive composition was prepared by changing the content of the cesium bis(trifluoromethanesulfonyl)imide represented by Chemical Formula 1-2 into 2.0 wt%.

### Comparative Example 18

A rechargeable lithium battery cell was manufactured in the same manner as in Example 3 except that the additive composition was prepared by changing the content of the compound represented by Chemical Formula z-3 into 5.0 wt%.

### Comparative Example 19

A rechargeable lithium battery cell was manufactured in the same manner as in Example 4 except that the additive composition was prepared by changing the content of the cesium bis(trifluoromethanesulfonyl)imide represented by Chemical Formula 1-2 into 2.0 wt%.

### Comparative Example 20

A rechargeable lithium battery cell was manufactured in the same manner as in Example 4 except that the additive composition was prepared by changing the content of the compound represented by Chemical Formula z-4 into 5.0 wt%.

Each additive composition of the rechargeable lithium battery cells according to Examples 1 to 8 and Comparative Examples 1 to 20 is shown in Table 1.

**(Table 1)**

| | Additive composition | | |
|---|---|---|---|
| | First compound (wt%) | Second compound (wt%) | First compound: second compound (weight ratio) |
| Example 1 | Chemical Formula 1-2 (0.5) | Chemical Formula z-1 (0.5) | 1:1 |
| Example 2 | Chemical Formula 1-2 (0.5) | Chemical Formula z-2 (0.5) | 1:1 |
| Example 3 | Chemical Formula 1-2 (0.5) | Chemical Formula z-3 (0.5) | 1:1 |
| Example 4 | Chemical Formula 1-2 (0.5) | Chemical Formula z-4 (0.75) | 1:1.5 |
| Example 5 | Chemical Formula 1-1 (0.5) | Chemical Formula z-1 (0.5) | 1:1 |
| Example 6 | Chemical Formula 1-1 (0.5) | Chemical Formula z-2 (0.5) | 1:1 |
| Example 7 | Chemical Formula 1-1 (0.5) | Chemical Formula z-3 (0.5) | 1:1 |
| Example 8 | Chemical Formula 1-1 (0.5) | Chemical Formula z-4 (0.75) | 1:1.5 |
| Example 9 | Chemical Formula 1-2 (0.5) | Chemical Formula z-1 (1) | 1:2 |
| Example 10 | Chemical Formula 1-2 (0.5) | Chemical Formula z-2 (1) | 1:2 |
| Example 11 | Chemical Formula 1-2 (0.5) | Chemical Formula z-3 (1) | 1:2 |
| Example 12 | Chemical Formula 1-2 (0.5) | Chemical Formula z-4 (1) | 1:2 |
| Example 13 | Chemical Formula 1-1 (0.5) | Chemical Formula z-1 (1) | 1:2 |
| Example 14 | Chemical Formula 1-1 (0.5) | Chemical Formula z-2 (1) | 1:2 |
| Example 15 | Chemical Formula 1-1 (0.5) | Chemical Formula z-3 (1) | 1:2 |
| Example 16 | Chemical Formula 1-1 (0.5) | Chemical Formula z-4 (1) | 1:2 |
| Comparative Example 1 | - | - | - |
| Comparative Example 2 | Chemical Formula 1-2 (0.5) | - | - |
| Comparative Example 3 | Chemical Formula 1-1 (0.5) | - | - |
| Comparative Example 4 | - | Chemical Formula z-1 (0.5) | - |
| Comparative Example 5 | Li(CF₃SO₂)₂N (0.5) | Chemical Formula z-1 (0.5) | 1:1 |
| Comparative Example 6 | - | Chemical Formula z-2 (0.5) | - |
| Comparative Example 7 | Li(CF₃SO₂)₂N (0.5) | Chemical Formula z-2 (0.5) | 1:1 |
| Comparative Example 8 | - | Chemical Formula z-3 (0.5) | - |
| Comparative Example 9 | Li (CF₃SO₂)₂N (0.5) | Chemical Formula z-3 (0.5) | 1:1 |
| Comparative Example 10 | - | Chemical Formula z-4 (0.75) | - |
| Comparative Example 11 | Li (CF₃SO₂)₂N (0.5) | Chemical Formula z-4 (0.75) | 1:1.5 |
| Comparative Example 12 | Chemical Formula 1-2 (0.5) | LiDFOB (0.5) | 1:1 |
| Comparative Example 13 | Chemical Formula 1-2 (2.0) | Chemical Formula z-1 (0.5) | 1:0.25 |
| Comparative Example 14 | Chemical Formula 1-2 (0.5) | Chemical Formula z-1 (5.0) | 1:10 |
| Comparative Example 15 | Chemical Formula 1-2 (2.0) | Chemical Formula z-2 (0.5) | 1:0.25 |
| Comparative Example 16 | Chemical Formula 1-2 (0.5) | Chemical Formula z-2 (5.0) | 1:10 |
| Comparative Example 17 | Chemical Formula 1-2 (2.0) | Chemical Formula z-3 (0.5) | 1:0.25 |
| Comparative Example 18 | Chemical Formula 1-2 (0.5) | Chemical Formula z-3 (5.0) | 1:10 |
| Comparative Example 19 | Chemical Formula 1-2 (2.0) | Chemical Formula z-4 (0.75) | 1:0.375 |
| Comparative Example 20 | Chemical Formula 1-2 (0.5) | Chemical Formula z-4 (5.0) | 1:10 |

### Evaluation 1: Evaluation of Initial Resistance Characteristics

The cells according to Examples 1 to 16 and Comparative Examples 1 to 20 were charged at 4 A and 4.2 V at room temperature (25 °C) and then, cut off at 100 mA and paused for 30 minutes. Subsequently, the cells were discharged respectively at 10 A for 10 seconds, at 1 A for 10 seconds, and at 10 A for 4 seconds and then, measured with respect to a current and a voltage at 18 seconds and 23 seconds to calculate a difference between initial resistance and each resistance at 18 seconds and 23 seconds according to Δ R= Δ V/ Δ I, and the results are shown in Table 2.

### Evaluation 2: Evaluation of Room-temperature Cycle-life Characteristics

The rechargeable lithium battery cells according to Examples 1 to 16 and Comparative Examples 1 to 20 were 200 times charged and discharged under charge conditions of a constant current-constant voltage of 1.0 C and 4.2 V and 0.33 C cut-off and under discharge conditions of a constant current of 1.0 C and 3.0 V at room temperature (25 °C) and then, measured with respect to a discharge capacity ratio (capacity retention) of 200^{th} cycle discharge capacity to 1^{st} cycle discharge capacity, and the results are shown in Table 2.

### Evaluation 3: Evaluation of High-temperature Leaving Characteristics

The rechargeable lithium battery cells of Examples 1 to 16 and Comparative Examples 1 to 20 were charged at a charge and discharge rate of 0.5 C in a mode of 4.2 V CC/CV for 3 hours and left in a 90 °C chamber for 20 hours and then, measured with respect to operation time of CID (Current Interrupt Device), and the results are shown in Table 2.

The CID (Current Interrupt Device) is a device detecting a pressure change, that is, a pressure increase in a closed and sealed device and thus cutting off a current by itself, when the pressure exceeds a certain pressure, which is obvious in the art and thus will not be illustrated in detail.

The CID operation time was measured to evaluate storage characteristics at a high temperature of the rechargeable lithium battery cells.

### Evaluation 4: Evaluation of Thermal Exposure

The rechargeable lithium battery cells according to Examples 1 to 16 and Comparative Examples 1 to 20 were charged at a charge rate of 0.5 C in a discharge state of 3.0 V and cut off at 4.2 V/3 hr and then, evaluated with respect to thermal exposure.

The rechargeable lithium battery cells according to Examples 1 to 16 and Comparative Examples 1 to 20 were placed in a chamber and then, examined with respect to changes, while a temperature of the chamber was increased from
room temperature to 140 °C at 5 °C /min and maintained at the temperature for 1 hour, and the results are shown in Table 2.

### Evaluation 5: Evaluation of Penetration Safety

The rechargeable lithium battery cells according to Examples 1 to 16, and Comparative Examples 1 to 20 were twice evaluated with respect to penetration characteristics in the following method, and the results are shown in Table 2.

The penetration limit evaluation was performed to evaluate battery safety by charging the cells to SOC (state of charge) 50 (a half of a total capacity of 100) and penetrating them with a 3.0 pi nail at 150 mm/s. The criteria are as follows.

### (Evaluation Criteria)

L0: No reaction
L1: Reversible damage occurs to the performance of the battery cell
L2: Irreversible damage occurs to the performance of the battery cell
L3: The weight of the electrolyte in the battery is reduced by less than 50%
L4: The weight of the electrolyte of the battery is reduced by greater than or equal to 50%
L5: Ignited or sparked (no rupture or explosion)
L6: Battery cell rupture (no explosion)
L7: Battery cell explosion

**(Table 2)**

| | Initial DC-IR (mOhm) | Room-temperature capacity retention rate (%) | 90 °C leaving charact eristics (hr) | Thermal exposure characteristics (@140 °C) | Penetration characterist ics |
|---|---|---|---|---|---|
| Example 1 | 35.9 | 85.3 | 77.0 | OK | L3/L3 |
| Example 9 | 36.4 | 85.4 | 85.1 | OK | L3/L3 |
| Comparative Example 1 | 34.9 | 84.2 | 36.5 | NG | L4/L4 |
| Comparative Example 2 | 35.0 | 84.5 | 38.1 | OK | L3/L3 |
| Comparative Example 4 | 35.8 | 84.9 | 58.2 | NG | L4/L4 |
| Comparative Example 5 | 36.0 | 84.8 | 61.4 | NG | L4/L4 |
| Comparative Example 12 | 36.1 | 84.6 | 25.2 | OK | L3/L3 |
| Example 2 | 35.7 | 85.1 | 72.6 | OK | L3/L3 |
| Example 10 | 36.3 | 85.2 | 79.3 | OK | L3/L3 |
| Comparative Example 6 | 35.5 | 84.0 | 55.1 | NG | L4/L4 |
| Comparative Example 7 | 35.9 | 84.4 | 60.3 | NG | L4/L4 |
| Example 3 | 35.1 | 85.4 | 73.6 | OK | L3/L3 |
| Example 11 | 35.5 | 85.3 | 80.1 | OK | L3/L3 |
| Comparative Example 8 | 35.6 | 84.4 | 55.5 | NG | L4/L4 |
| Comparative Example 9 | 35.8 | 84.5 | 63.0 | NG | L4/L4 |
| Example 4 | 35.0 | 85.7 | 83.5 | OK | L3/L3 |
| Example 12 | 34.9 | 85.5 | 92.3 | OK | L3/L3 |
| Comparative Example 10 | 34.6 | 85.0 | 68.3 | NG | L4/L4 |
| Comparative Example 11 | 35.2 | 85.1 | 65.5 | NG | L4/L4 |
| Comparative Example 3 | 35.1 | 84.3 | 35.3 | OK | L3/L3 |
| Example 5 | 35.7 | 85.2 | 76.2 | OK | L3/L3 |
| Example 13 | 36.5 | 85.3 | 84.1 | OK | L3/L3 |
| Example 6 | 35.3 | 85.2 | 73.4 | OK | L3/L3 |
| Example 14 | 36.0 | 85.1 | 75.2 | OK | L3/L3 |
| Example 7 | 35.0 | 85.5 | 72.6 | OK | L3/L3 |
| Example 15 | 34.8 | 85.6 | 89.8 | OK | L3/L3 |
| Example 8 | 35.1 | 85.6 | 80.2 | OK | L3/L3 |
| Example 16 | 34.7 | 85.5 | 93.4 | OK | L3/L3 |
| Comparative Example 13 | Solubility problem occurred (not measurable) | | | | |
| Comparative Example 14 | 39.2 | 80.7 | 30.6 | OK | L3/L3 |
| Comparative Example 15 | Solubility problem occurred (not measurable) | | | | |
| Comparative Example 16 | 38.5 | 74.7 | 21.2 | OK | L3/L3 |
| Comparative Example 17 | Solubility problem occurred (not measurable) | | | | |
| Comparative Example 18 | 37.3 | 81.0 | 23.4 | OK | L3/L3 |
| Comparative Example 19 | Solubility problem occurred (not measurable) | | | | |
| Comparative Example 20 | 37.1 | 81.3 | 32.4 | OK | L3/L3 |

Referring to Table 2, the rechargeable lithium battery cells of Comparative Examples 1, 4, 6, 8, and 10 including the additive composition not including the first compound and the rechargeable lithium battery cells of Comparative Examples 5, 7, 9, and 11 including the additive composition including other additives instead of the first compound, compared with the rechargeable lithium battery cells of Examples 1 to 16, exhibited all deteriorated retention characteristics, high-temperature leaving characteristics, thermal exposure characteristics, and penetration characteristics.

In addition, the rechargeable lithium battery cells of Comparative Examples 1 to 3 using an additive composition not including the second compound and the rechargeable lithium battery cell of Comparative Example 12 using an additive composition including other additives instead of the second compound, compared with the rechargeable lithium battery cells of Examples 1 to 16, exhibited deteriorated capacity retention characteristics and high-temperature leaving characteristics.

In addition, the rechargeable lithium battery cells of Comparative Examples 13, 15, 17, and 19 having a ratio of the first compound and the second compound of less than 1:0.4 exhibited a solubility problem, which made the battery characteristics immeasurable.

The rechargeable lithium battery cells of Comparative Examples 14, 16, 18, and 20 having a ratio of the first compound and the second compound of greater than 1:4, compared with the rechargeable lithium battery cells of Examples 1 to 16, exhibited deteriorated capacity retention characteristics and high-temperature leaving characteristics.

Accordingly, the rechargeable lithium battery cells of the examples included an additive with a specific combination in a specific ratio, compared with the rechargeable lithium battery cells of the comparative examples not satisfying these conditions, exhibited improved capacity retention characteristics, high-temperature leaving characteristics, thermal exposure characteristics, and/or penetration characteristics.

## Claims

1. An electrolyte for a rechargeable lithium battery, comprising
a non-aqueous organic solvent,
a lithium salt, and
an additive,
wherein the additive is a composition including a first compound represented by Chemical Formula 1 and a second compound represented by Chemical Formula 2-1 or Chemical Formula 2-2, and
the first compound and the second compound are included in a weight ratio of 1 : 1 to 1 : 2: 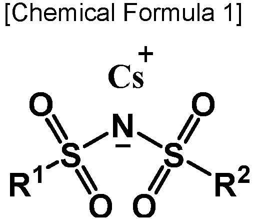
wherein, in Chemical Formula 1,
R¹ and R² are each independently a fluoro group or a C1 to C4 fluoroalkyl group substituted with at least three fluoro groups, 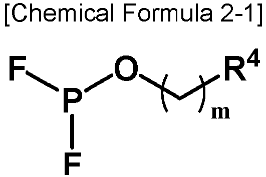
wherein, in Chemical Formula 2-1,
m is one of integers from 1 to 5, and
R⁴ is a cyano group (-CN) or a difluorophosphite group (-OPF₂), 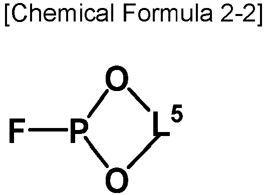
wherein, in Chemical Formula 2-2,
L⁵ is a substituted or unsubstituted C2 to C5 alkylene group.

2. The electrolyte for the rechargeable lithium battery of claim 1, wherein
the first compound and the second compound are included in a weight ratio of 1: 1 to 1: 1.5.

3. The electrolyte for the rechargeable lithium battery of claim 1, wherein
Chemical Formula 1 is represented by Chemical Formula 1-1 or Chemical Formula 1-2:

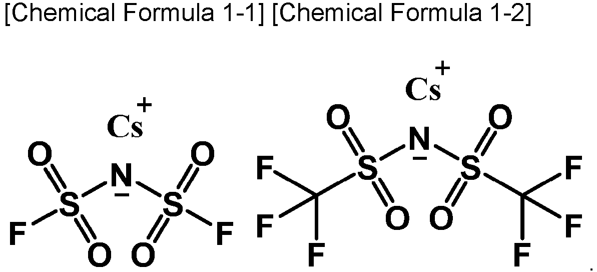

4. The electrolyte for the rechargeable lithium battery of claim 1, wherein
the second compound is represented by Chemical Formula 2-2a or Chemical Formula 2-2b: 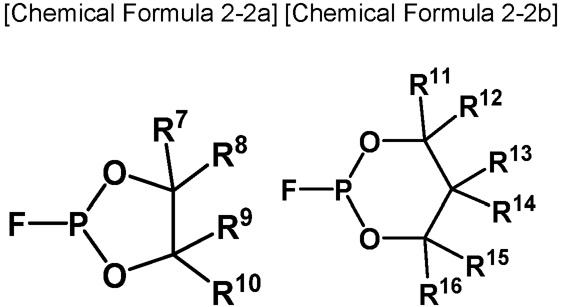
wherein, in Chemical Formula 2-2a and Chemical Formula 2-2b,
R⁷ to R¹⁶ are each independently hydrogen, a halogen group, or a substituted or unsubstituted C1 to C5 alkyl group.

5. The electrolyte for the rechargeable lithium battery of claim 1, wherein
the second compound is any one selected from the compounds listed in Group 1:

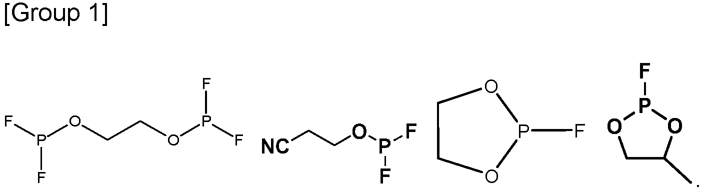

6. The electrolyte for the rechargeable lithium battery of claim 1, wherein
the first compound is included in an amount of 0.05 wt% to 2.0 wt% based on the total weight of the electrolyte for the rechargeable lithium battery.

7. The electrolyte for the rechargeable lithium battery of claim 1, wherein
the second compound is included in an amount of 0.05 wt% to 5.0 wt% based on the total weight of the electrolyte for the rechargeable lithium battery.

8. The electrolyte for the rechargeable lithium battery of claim 1, wherein
the first compound is included in an amount of 0.05 wt% to 5.0 wt% based on the total weight of the electrolyte for the rechargeable lithium battery, and
the second compound is included in an amount of 0.5 wt% to 5.0 wt% based on the total weight of the electrolyte for the rechargeable lithium battery.

9. The electrolyte for the rechargeable lithium battery of claim 1, wherein
the composition is included in an amount of 1.0 wt% to 5.0 wt% based on the total weight of the electrolyte for the rechargeable lithium battery.

10. A rechargeable lithium battery, comprising
a positive electrode including a positive electrode active material;
a negative electrode including a negative electrode active material; and
an electrolyte for a rechargeable lithium battery of any one of claim 1 to claim 9.

## Patentansprüche

1. Elektrolyt für eine wiederaufladbare Lithiumbatterie, umfassend
ein nicht wässriges organisches Lösungsmittel,
ein Lithiumsalz, und
ein Additiv,
wobei das Additiv eine Zusammensetzung ist, die eine erste Verbindung, dargestellt durch die chemische Formel 1, und eine zweite Verbindung, dargestellt durch die chemische Formel 2-1 oder die chemische Formel 2-2, beinhaltet, und
die erste Verbindung und die zweite Verbindung in einem Gewichtsverhältnis von 1:1 bis 1:2 enthalten sind: 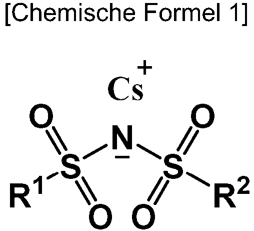
wobei in der chemischen Formel 1
R¹ und R² jeweils unabhängig eine Fluorgruppe oder eine C1- bis C4-Fluoralkylgruppe sind, die mit mindestens drei Fluorgruppen substituiert ist, 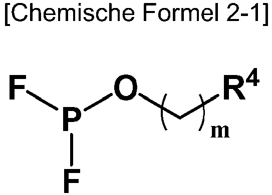
wobei in der chemischen Formel 2-1
m eine der ganzen Zahlen von 1 bis 5 ist, und
R⁴ eine Cyanogruppe (-CN) oder eine Difluorphosphitgruppe (-OPF₂) ist, 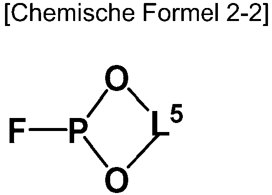
wobei in der chemischen Formel 2-2,
L⁵ eine substituierte oder unsubstituierte C2- bis C5-Alkylengruppe ist.

2. Elektrolyt für die wiederaufladbare Lithiumbatterie nach Anspruch 1, wobei
die erste Verbindung und die zweite Verbindung in einem Gewichtsverhältnis von 1:1 bis 1:1,5 enthalten sind.

3. Elektrolyt für die wiederaufladbare Lithiumbatterie nach Anspruch 1, wobei
die chemische Formel 1 durch die chemische Formel 1-1 oder die chemische Formel 1-2 dargestellt ist:

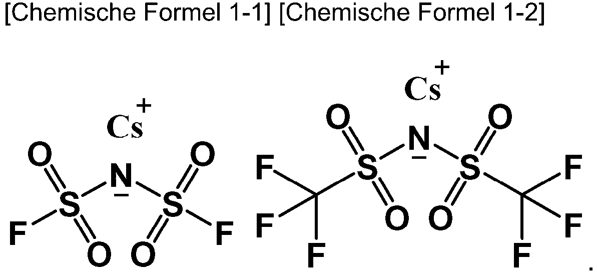

4. Elektrolyt für die wiederaufladbare Lithiumbatterie nach Anspruch 1, wobei
die zweite Verbindung durch die chemische Formel 2-2a oder die chemische Formel 2-2b dargestellt ist: 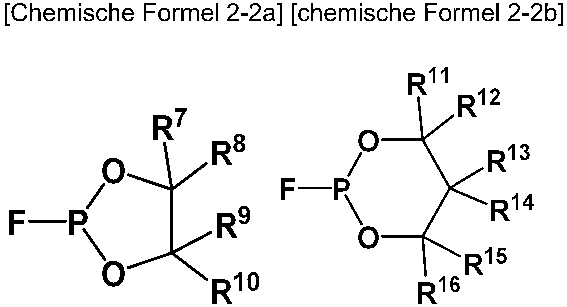
wobei in der chemischen Formel 2-2a und der chemischen Formel 2-2b
R⁷ bis R¹⁶ jeweils unabhängig Wasserstoff, eine Halogengruppe oder eine substituierte oder unsubstituierte C1- bis C5-Alkylgruppe sind.

5. Elektrolyt für die wiederaufladbare Lithiumbatterie nach Anspruch 1, wobei
die zweite Verbindung eine beliebige ist, die aus den in Gruppe 1 aufgeführten Verbindungen ausgewählt ist:

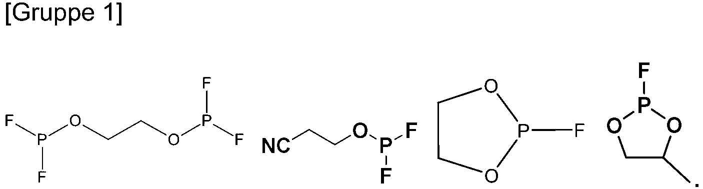

6. Elektrolyt für die wiederaufladbare Lithiumbatterie nach Anspruch 1, wobei
die erste Verbindung in einer Menge von 0,05 Gew.-% bis 2,0 Gew.-% basierend auf dem Gesamtgewicht des Elektrolyten für die wiederaufladbare Lithiumbatterie enthalten ist.

7. Elektrolyt für die wiederaufladbare Lithiumbatterie nach Anspruch 1, wobei
die zweite Verbindung in einer Menge von 0,05 Gew.-% bis 5,0 Gew.-% basierend auf dem Gesamtgewicht des Elektrolyten für die wiederaufladbare Lithiumbatterie enthalten ist.

8. Elektrolyt für die wiederaufladbare Lithiumbatterie nach Anspruch 1, wobei
die erste Verbindung in einer Menge von 0,05 Gew.-% bis 5,0 Gew.-% basierend auf dem Gesamtgewicht des Elektrolyten für die wiederaufladbare Lithiumbatterie enthalten ist, und
die zweite Verbindung in einer Menge von 0,5 Gew.-% bis 5,0 Gew.-% basierend auf dem Gesamtgewicht des Elektrolyten für die wiederaufladbare Lithiumbatterie enthalten ist.

9. Elektrolyt für die wiederaufladbare Lithiumbatterie nach Anspruch 1, wobei
die Zusammensetzung in einer Menge von 1,0 Gew.-% bis 5,0 Gew.-% basierend auf dem Gesamtgewicht des Elektrolyten für die wiederaufladbare Lithiumbatterie enthalten ist.

10. Wiederaufladbare Lithiumbatterie, umfassend
eine positive Elektrode, die ein Aktivmaterial für die positive Elektrode beinhaltet;
eine negative Elektrode, die ein Aktivmaterial für die negative Elektrode beinhaltet; und
einen Elektrolyten für eine wiederaufladbare Lithiumbatterie nach einem von Anspruch 1 bis Anspruch 9.

## Revendications

1. Électrolyte pour une batterie rechargeable au lithium, comportant :
un solvant organique non aqueux,
un sel de lithium, et
un additif,
dans lequel l'additif est une composition comprenant un premier composé représenté par la Formule chimique 1 et un deuxième composé représenté par la Formule chimique 2-1 ou la Formule chimique 2-2, et
le premier composé et le deuxième composé sont compris dans un rapport pondéral de 1: 1 à 1: 2 : 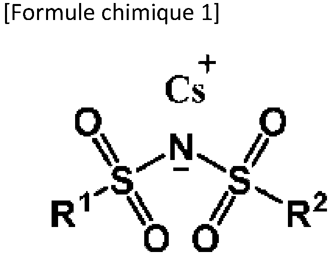
dans lequel, dans la Formule chimique 1,
R¹ et R² sont chacun indépendamment un groupe fluoro ou un groupe fluoroalkyle en C1 à C4 substitué par au moins trois groupes fluoro, 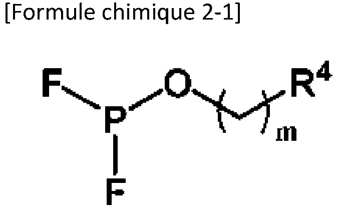
dans lequel, dans la Formule chimique 2-1,
m est l'un des entiers de 1 à 5, et
R⁴ est un groupe cyano (-CN) ou un groupe difluorophosphite (-OPF₂), 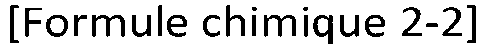 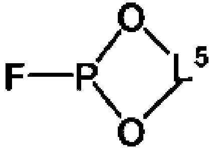
dans lequel, dans la Formule chimique 2-2,
L⁵ est un groupe alkylène en C2 à C5 substitué ou non substitué.

2. Électrolyte pour la batterie rechargeable au lithium selon la revendication 1, dans lequel
le premier composé et le deuxième composé sont compris dans un rapport pondéral de 1: 1 à 1: 1,5.

3. Électrolyte pour la batterie rechargeable au lithium selon la revendication 1, dans lequel
la Formule chimique 1 est représentée par la Formule chimique 1-1 ou la Formule chimique 1-2 :

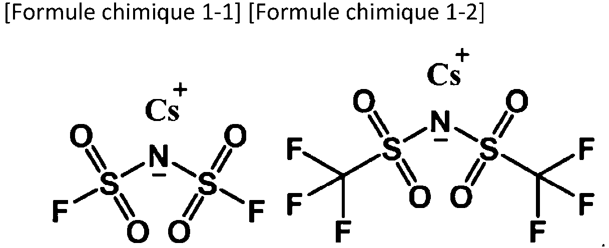

4. Électrolyte pour la batterie rechargeable au lithium selon la revendication 1, dans lequel
le deuxième composé est représenté par la Formule chimique 2-2a ou la Formule
chimique 2-2b : 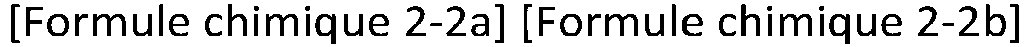 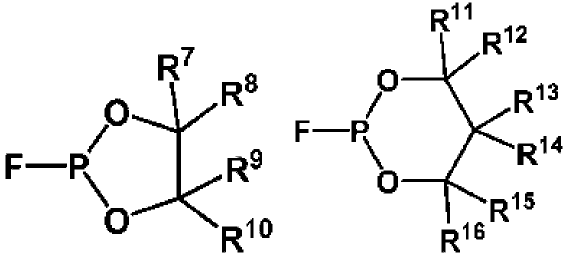
dans lequel, dans la Formule chimique 2-2a et la Formule chimique 2-2b,
R⁷ à R¹⁶ sont chacun indépendamment hydrogène, un groupe halogène ou un groupe alkyle en C1 à C5 substitué ou non substitué.

5. Électrolyte pour la batterie rechargeable au lithium selon la revendication 1, dans lequel
le deuxième composé est l'un quelconque sélectionné parmi les composés énumérés dans le Groupe 1 :

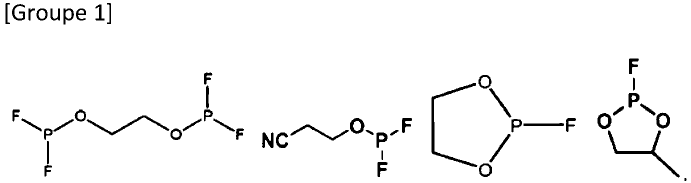

6. Électrolyte pour la batterie rechargeable au lithium selon la revendication 1, dans lequel
le premier composé est compris en une quantité de 0,05 % en poids à 2,0 % en poids sur la base du poids total de l'électrolyte pour la batterie rechargeable au lithium.

7. Électrolyte pour la batterie rechargeable au lithium selon la revendication 1, dans lequel
le deuxième composé est compris en une quantité de 0,05 % en poids à 5,0 % en poids sur la base du poids total de l'électrolyte pour la batterie rechargeable au lithium.

8. Électrolyte pour la batterie rechargeable au lithium selon la revendication 1, dans lequel
le premier composé est compris en une quantité de 0,05 % en poids à 5,0 % en poids sur la base du poids total de l'électrolyte pour la batterie rechargeable au lithium, et
le deuxième composé est compris en une quantité de 0,5 % en poids à 5,0 % en poids sur la base du poids total de l'électrolyte pour la batterie rechargeable au lithium.

9. Électrolyte pour la batterie rechargeable au lithium selon la revendication 1, dans lequel
la composition est comprise en une quantité de 1,0 % en poids à 5,0 % en poids sur la base du poids total de l'électrolyte pour la batterie rechargeable au lithium.

10. Batterie rechargeable au lithium, comportant :
une électrode positive comprenant un matériau actif d'électrode positive ;
une électrode négative comprenant un matériau actif d'électrode négative ; et
un électrolyte pour la batterie rechargeable au lithium selon l'une quelconque de la revendication 1 à la revendication 9.
